# EUROPÄISCHE PATENTSCHRIFT

(11) **EP 1 133 651 B1**
(45) Veröffentlichungstag und Bekanntmachung des Hinweises auf die Patenterteilung: **22.01.2003**
(21) Anmeldenummer: 99962136.0
(22) Anmeldetag: 10.11.1999
(51) Int. Cl.: F16K 11/052

(54) **SCHWENKBARE VENTILEINRICHTUNG, INSBESONDERE VERSTÄRKER**
PIVOTING VALVE DEVICE, ESPECIALLY AN AMPLIFIER
SOUPAPE A BASCULE, NOTAMMENT AMPLIFICATEUR

(30) Priorität: 26.11.1998 DE 19854620
(43) Veröffentlichungstag der Anmeldung: 19.09.2001
(73) Patentinhaber: Festo AG & Co, 73734 Esslingen (DE)
(72) Erfinder: MUTH, Andreas, D-73230 Kirchheim (DE); WAIBLINGER, Peter, D-73733 Esslingen (DE)
(74) Vertreter: Abel, Martin, Dipl.-Ing.
(86) Internationale Anmeldenummer: EP9908613
(87) Internationale Veröffentlichungsnummer: WO00031447

(56) Entgegenhaltungen:
- EP-A- 0 933 569
- DE-A- 3 503 357
- DE-C- 3 734 079
- DE-U- 7 324 333
- GB-A- 1 453 796
- GB-A- 2 089 941
- US-A- 1 166 027
- US-A- 3 446 244

## Beschreibung

Die Erfindung betrifft eine Ventileinrichtung, insbesondere Verstärker, gemäß dem Oberbegriff des Patentanspruches 1.

Ventileinrichtungen dieser Art werden üblicherweise als pneumatische Verstärker eingesetzt, die in der Lage sind, Fluidströme hohen Druckes und hohen Durchsatzes mittels kleiner Steuerdrücke zu beeinflussen. Bei einer aus der GB-A-2 089 941 bekannten Ventileinrichtung der oben genannten Art ist ein wippenartiges, von oben und von unten her gelagertes Schaltelement vorgesehen, das zwei Verschlußpartien trägt, die in Abhängigkeit von der Schaltstellung des Schaltelementes die Mündung eines jeweils zugeordneten Fluidkanals verschließen oder freigeben können. Der jeweils freigegebene Fluidkanal steht über eine Verbindungskammer hinweg mit einem dritten Fluidkanal in Verbindung. Die jeweilige Schaltstellung wird durch zwei axial beabstandet am Schaltelement angreifende Betätigungsmembranen vorgegeben, die nach Bedarf mit unter einem Steuerdruck stehendem Fluid beaufschlagbar sind. Das Umschalten der Ventileinrichtung erfolgt hierbei im Rahmen einer schwenk bewegung des Schaltelementes.

Als nachteilig wird bei einer Ventileinrichtung dieser Art angesehen, daß eine Verringerung der Baugröße und eine Standardisierung des Aufbaues nur in begrenztem Rahmen möglich ist. Die erforderliche Kanalführung im Innern des Gehäuses läßt ein Unterschreiten einer gewissen Bauhöhe nicht ohne weiteres zu. Sollen verschiedene Verstärkerfunktionen realisiert werden, sind in der Regel tiefgreifende Änderungen im konstruktiven Aufbau notwendig.

Die DE-A-3 503 357 beschreibt ein Ventil mit einem wippenartigen Ventilkörper, der über einer Ventilkammer Liegt, in die drei Fluidkanäle einmünden. Mittig unter dem Ventilkörper ist eine zur Schwenklagerung dienende Lagerrippe angeordnet.

Es ist die Aufgabe der vorliegenden Erfindung, eine Ventileinrichtung zu schaffen, die bei variablerem Aufbau über kompaktere Abmessungen verfügt.

Zur Lösung dieser Aufgabe sind die Merkmale des Kennzeichnenden Teils des Patentanspruches 1 vorgesehen.

Auf diese Weise liegt eine Ventileinrichtung vor, die sich in äußerst flacher Bauweise realisieren läßt, weil die Betätigungsmembranen einerseits und die Verschlußpartien andererseits nebeneinander angeordnet werden können, wobei das Umschalten durch eine Schwenk- bzw. Kippbewegung des wippenartig ausgebildeten und daher als Schaltwippe bezeichneten Schaltelementes stattfindet. Die Ventileinrichtung läßt sich relativ universell einsetzen und eignet sich bei entsprechender Ausgestaltung insbesondere auch zur Verwendung bei Mikroaktoren als Ventilhauptstufe oder im Zusammenhang mit anderen Aktoren als schneller Antrieb für Ventile großer Nennweite. Darüberhinaus. begünstigt der erfindungsgemäße Aufbau eine Realisierung der Ventileinrichtung im Rahmen mikrotechnischer Fertigungsverfahren, da diese speziell zur Erzeugung ebener, schichtartiger Strukturen geeignet sind. Schließlich begünstigt die Bauweise eine Realisierung von Ventileinrichtungen unterschiedlicher Funktionalität, weil speziell bei einem Verstärker die Möglichkeit besteht, die Ansteuerungsebene und die Leistungsebene gut voneinander zu trennen.

Vorteilhafte Weiterbildungen der Erfindung gehen aus den Unteransprüchen hervor.

Die Schaltwippe und die Betätigungsmembranen sind zweckmäßigerweise in einem gemeinsamen Innenraum des Gehäuses untergebracht. Das Gehäuse selbst kann aus mehreren schichtartig aneinandergesetzten Gehäuseteilen bestehen, wobei die beiden Betätigungsmembranen zwischen den gleichen Gehäuseteilen eingespannt sein können.

Es wäre ein Aufbau denkbar, bei dem die Betätigungsmembranen mit der Schaltwippe lediglich in Berührkontakt stehen. Als zweckmäßiger wird derzeit aber ein Aufbau angesehen, bei dem die Betätigungsmembranen nicht nur am Gehäuse, sondern auch an der in sich starren Schaltwippe befestigt sind.

Sowohl die Betätigungsmembranen als auch die den Verschlußpartien zugeordneten Kanalmündungen liegen untereinander zweckmäßigerweise zumindest in etwa auf gleicher Höhe.

Die beiden Betätigungsmembranen bilden zweckmäßigerweise jeweils eine bewegliche Wand zwischen der Verbindungskammer und einer Steuerkammer, wobei die beiden Steuerkammern voneinander getrennt sind und jeweils mit einem Steuerkanal kommunizieren, über den ihre Fluidbeaufschlagung vorgegeben werden kann. Bei einem solchen Aufbau kann häufig schon allein durch Änderung des Anschlußschemas bezüglich der Kanäle eine unterschiedliche Funktionsweise realisiert werden, beispielsweise Verstärkerarten, die normalerweise eine Schließstellung oder normalerweise eine Offenstellung vorgeben.

Die Betätigungsmembranen können gleich- oder ungleichflächig in unterschiedlichen Größen, Formen und Querschnitten ausgeführt sein, wobei im kräftefreien Zustand bereits eingeprägte Auslenkungen vorgesehen sein können, um die Schaltstellung der Schaltwippe zu beeinflussen.

Die Verschlußpartien können in die Schaltwippe integriert oder in Gestalt separat angebrachter Dichtkörper ausgeführt sein.

Bei den beiden Betätigungsmembranen kann es sich um Einzelmembranen handeln. Eine einfachere Herstellung und Montage ist allerdings möglich, wenn die Betätigungsmembranen in einem gemeinsamen integralen Membranelement zusammengefaßt sind.

Nachfolgend wird die Erfindung anhand der beiliegenden Zeichnung näher erläutert. In dieser zeigen:
- Figur 1: eine als pneumatischer Verstärker ausgeführten Ventileinrichtung im Längsschnitt, wobei die Schwenklagereinrichtung abweichend von der Erfindung unterhalb der Schaltwippe dargestellt ist,
- Figur 2: eine erfindungsgemäße Ventileinrichtung in stark schematisierter Längsschnittdarstellung, wobei ein Verstärker des Typs "normalerweise geöffnet" vorliegt und die Offenstellung gezeigt ist,
- Figur 3: die Ventileinrichtung aus Figur 2 in der Schließstellung der Schaltwippe,
- Figur 4: eine Ventileinrichtung identischen Aufbaues wie diejenige aus Figur 2, wobei allerdings ein anderes fluidisches Anschlußschema vorgesehen ist, so daß ein Typ "normalerweise geschlossen" vorliegt, wobei die Schließstellung gezeigt ist, und
- Figur 5: die Ventileinrichtung aus Figur 4 in der Offenstellung.

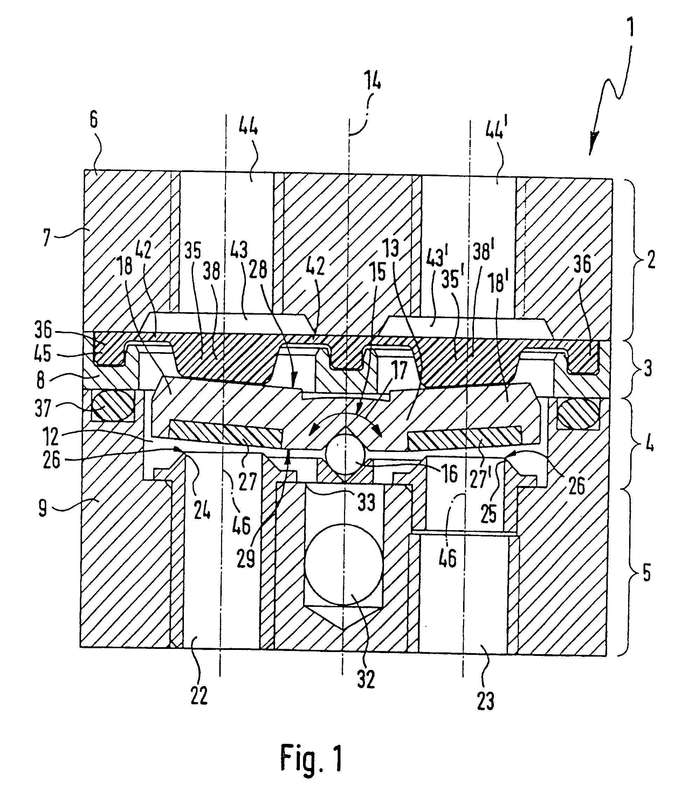

Zunächst sei anhand der Figur 1 der allgemeine Aufbau einer Ventileinrichtung erläutert, die sich vom erfindungsgemäßen Aufbau dadurch unterscheidet, dass die Schwenklagereinrichtung nicht oberhalb, sondern unterhalb der Schaltwippe abgebildet ist.

Die allgemein mit Bezugsziffer 1 bezeichnete Ventileinrichtung hat hier einen Aufbau, der eine Verwendung als pneumatischer Verstärker ermöglicht. Die Ventileinrichtung 1 ist dabei funktionell in mehrere aufeinanderliegende Ebenen unterteilt, und zwar in eine beim Ausführungsbeispiel obenliegende erste Anschlußebene 2, eine darunterliegende Ansteuerebene 3, eine unter dieser liegende Leistungsebene 4 und eine zuunterst angeordnete zweite Anschlußebene 5.

Die Ventileinrichtung 1 enthält ein vorzugsweise block- oder plattenähnliches Gehäuse 6, das sich aus mehreren schichtartig aneinandergesetzten Gehäuseteilen 7, 8, 9 zusammensetzt. Die Gehäuseteilung muß nicht notwendigerweise mit der erläuterten Ebeneneinteilung übereinstimmen.

Das Gehäuse 6 enthält einen Gehäuse-Innenraum 12, in dem ein bewegliches Schaltelement untergebracht ist, das aufgrund seiner wippenartigen Ausgestaltung und Betriebsweise als Schaltwippe 13 bezeichnet sei.

Ungeachtet der im Betrieb getroffenen Orientierung des Gehäuses 6 sei die Richtung der Aneinanderreihung der einzelnen Ebenen nachfolgend als Höhenrichtung 14 bezeichnet, die in Figur 1 durch eine strichpunktierte Linie markiert ist. Die Schaltwippe 13 ist so im Gehäuseinnenraum 12 angeordnet, daß sie sich quer zu dieser Höhenrichtung 14 erstreckt, wobei sie einen abgewinkelten Längsverlauf haben kann.

Die Schaltwippe 13 verfügt über einen beim Ausführungsbeispiel ihrer Längsmitte zugeordneten Schwenkbereich 15, mit dem sie sich über eine Schwenklagereinrichtung 16 derart gelenkig am Gehäuse 6 abstützt, daß sie bezüglich diesem eine durch Doppelpfeil angedeutete Schwenkbewegung 17 ausführen kann, im Rahmen derer die beiden vom Schwenkbereich 15 nach entgegengesetzten Richtungen wegragenden Wippenarme 18, 18' vergleichbar einem Wippvorgang hin und her bewegt werden. Die Schwenklagereinrichtung 16 kann ein fester Bestandteil des Gehäuses 6 sein oder kann von einem oder mehreren separaten Teilen gebildet sein, die sich zwischen dem Gehäuse 6 und dem Schwenkbereich 15 der Schaltwippe 13 abstützen und die beispielsweise kugel- oder wellenartig ausgeführt sein können. In den Gehäuseinnenraum 12 münden zwei die zweite Anschlußebene 5 durchsetzende erste und zweite Fluidkanäle 22, 23, deren Mündungen 24, 25 in Höhenrichtung 14 orientiert sind und von einem ringförmigen Ventilsitz 26 umschlossen werden. Die Ventilsitze 26 können Bestandteil separater, in das betreffende untere Gehäuseteil 9 eingesetzter Bauteile sein. Eine solche Ausgestaltung hat den Vorteil, daß die Ventilsitze sehr einfach düsenförmig ausgebildet werden können. Außerdem lassen sich bei Bedarf Einsatzteile verwenden, die über unterschiedliche Durchmesser verfügen, um im Rahmen eines modularen Aufbaus nach Bedarf verschiedene Strömungsquerschnitte zur Verfügung stellen zu können.

Die Anordnung ist so getroffen, daß jede Mündung 24, 25 einem der beiden Wippenarme 18, 18' gegenüberliegt. Jeder Wippenarm 18, 18' verfügt in dem der betreffenden Mündung 24, 25 gegenüberliegenden Bereich über eine Verschlußpartie 27, 27' aus geeignetem Dichtmaterial, insbesondere aus Kunststoffmaterial mit gummielastischen Eigenschaften.

Die Kanalmündungen 24, 25 liegen mit Bezug zur Höhenrichtung 14 zweckmäßigerweise auf gleicher Höhe des Gehäuses 6, wobei sie quer zur Höhenrichtung 14 mit Abstand nebeneinanderliegen. Indem die Schaltwippe 13 derart geringfügig abgewinkelt ist, daß ihre Wippenarme 18, 18' an der den Verschlußpartien 27, 27' entgegengesetzten oberen Längsseite 28 einen stumpfen Winkel von weniger als 180° einschließen, läßt sich die Schaltwippe 13 zwischen zwei Schaltstellungen verschwenken, in denen jeweils die eine Verschlußpartie 27 bzw. 27' durch Anlage am zugeordneten Ventilsitz 26 die betreffende Kanalmündung 24 bzw. 25 verschließt, während gleichzeitig die jeweils andere Verschlußpartie 27' bzw. 27 vom Ventilsitz 26 der zugeordneten Kanalmündung 25 bzw. 24 abgehoben ist und einen Fluiddurchgang durch die betreffende Kanalmündung hindurch freigibt. Die Schaltbewegung erfolgt ähnlich der Bewegung einer Wippe oder Schaukel.

Das untere Gehäuseteil 9 wird im Bereich der zweiten Anschlußebene 5 noch von einem dritten Fluidkanal 32 durchsetzt, der an geeigneter Stelle ebenfalls in den Gehäuseinnenraum 12 einmündet, wobei die Verbindung ständig offen ist. Die zugehörige Kanalmündung 33 ist zweckmäßigerweise ebenfalls in Höhenrichtung 14 orientiert und kann sich zwischen den beiden anderen Kanalmündungen 24, 25 befinden. Beim Ausführungsbeispiel liegt sie dem Schwenkbereich 15 in Höhenrichtung 14 gegenüber.

Die Schaltwippe 13 befindet sich im Bereich der Leistungsebene 4 in dem beim Ausführungsbeispiel unteren Bereich des Gehäuseinnenraumes 12, der nachfolgend als Verbindungskammer 34 bezeichnet sei. Je nach Schaltstellung der Schaltwippe 13 liegt durch die Verbindungskammer 35 hindurch eine Fluidverbindung zwischen dem dritten Fluidkanal 32 und dem ersten oder zweiten Fluidkanal 22, 23 vor.

In dem sich in Höhenrichtung 14 im Bereich der oberen Längsseite 28 an die Schaltwippe 13 anschließenden Bereich des Gehäuseinnenraumes 12, der die Ansteuerebene 3 repräsentiert, befinden sich zwei Betätigungsmembranen 35, 35'. Sie bestehen beim Ausführungsbeispiel aus einem polymeren Kunststoffmaterial und verfügen über gummielastische Eigenschaften. Die Anordnung ist so getroffen, daß jedem Wippenarm 18, 18' auf der der betreffenden Verschlußpartie 27, 27' entgegengesetzten Längsseite 28 eine der Betätigungsmembranen 35, 35' gegenüberliegt. Somit greifen die beiden Betätigungsmembranen 35, 35' jeweils am gleichen Längenabschnitt der Schaltwippe 13 an, an dem auch eine der Verschlußpartien 27, 27' vorgesehen ist, lediglich auf der entgegengesetzten Längsseite der Schaltwippe 13.

Zweckmäßigerweise liegen die beiden Betätigungsmembranen 35, 35' bezüglich der Höhenrichtung 14 auf gleicher Höhe nebeneinander in der Ansteuerebene 3. Sie sind jeweils mit ihrem äußeren umlaufenden Randbereich 36 unter Abdichtung am Gehäuse 6 festgelegt. Beim Ausführungsbeispiel der Figur 1 geschieht dies dadurch, daß ihr umlaufender Randbereich 36 zwischen dem die erste Anschlußebene definierenden oberen Gehäuseteil 7 und einem die Ansteuerebene 3 definierenden mittleren Gehäuseteil 8 fest eingespannt ist. Die beiden Betätigungsmembranen 35, 35' sind also zwischen den gleichen Gehäuseteilen 7, 8 fixiert, was die Montage sehr vereinfacht.

Der umlaufende Randbereich 36 der Betätigungsmembranen 35, 35' bildet gleichzeitig die Abdichtung zwischen dem oberen und dem mittleren Gehäuseteil 7, 8. Die Abdichtung zwischen dem mittleren und dem unteren Gehäuseteil 8, 9 erfolgt beim Ausführungsbeispiel durch eine zwischen diese Gehäuseteile im Umfangsbereich des Gehäuseinnenraumes 12 zwischengefügte ringförmige Dichtung 37.

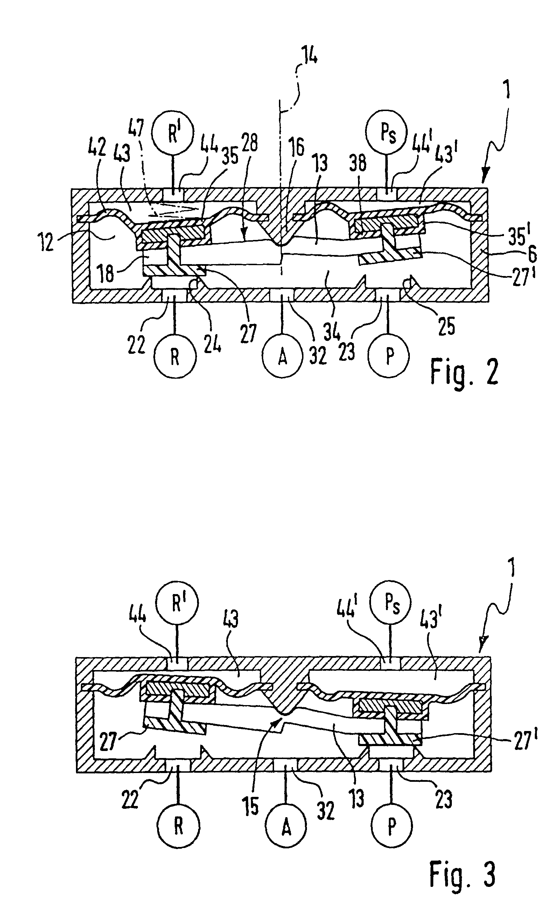

Es versteht sich, daß die Unterteilung des Gehäuses 6 auch in anderer als der gezeigten Weise erfolgen kann und es wäre insbesondere möglich, lediglich zwei Gehäuseteile vorzusehen, die zwischen sich den Gehäuseinnenraum 12 definieren und zwischen denen die Betätigungsmembranen 35, 35' randseitig eingespannt sind (vergleichbar den Ausgestaltungen der Figuren 2 bis 5).

Mit ihrem zentralen Membranbereich 38 greifen die Betätigungsmembranen 35, 35' am jeweils zugeordneten Wippenarm 18, 18' an. Hierbei wäre eine reiner Berührkontakt denkbar, doch empfiehlt sich die beim Ausführungsbeispiel vorhandene physische Befestigung, die dazu führt, daß ein jeweiliger zentraler Membranbereich 38, 38' ungeachtet der Schwenkrichtung der Schaltwippe 13 stets nur gemeinsam mit dem zugeordneten Wippenarm 18, 18' bewegbar ist. Um die Montage und eine eventuell erforderliche Demontage zu erleichtern, kann es sich um eine lösbare Befestigungsart handeln.

Die gewünschte Schaltstellung und/oder Schaltbewegung der Schaltwippe 13 läßt sich durch aufeinander abgestimmte gesteuerte Fluidbeaufschlagung der Betätigungsmembranen 35, 35' erzielen. Bei entsprechender Fluidbeaufschlagung werden die zentralen Membranbereiche 38, 38' zu einer Bewegung etwa in Höhenrichtung 14 veranlaßt, welche Bewegung drückend oder ziehend auf die Schaltwippe 13 übertragen wird. Da die zentralen Membranbereiche 38, 38' über elastische Zwischenbereiche 42 flexibel an den umlaufenden Randbereichen 36 aufgehängt sind, können sie die bei der Schwenk- bzw. Kippbewegung der Schaltwippe 13 auftretende geringfügige Richtungsänderung der Bewegung ohne weiteres kompensieren.

Es ist möglich, die Ventileinrichtung mit einer in Figur 2 exemplarisch strichpunktiert angedeuteten Federeinrichtung 47 zu versehen, die sich zwischen dem Gehäuse 6 und der Schaltwippe 13 abstützt und die Schaltwippe 13 definiert in eine Schaltstellung vorspannt, die die Grundstellung der Ventileinrichtung darstellt.

Durch die beiden Betätigungsmembranen 35, 35' wird der Gehäuseinnenraum 12 in die schon erwähnte Verbindungskammer 34 und in zwei jeweils einer der Betätigungsmembranen 35, 35' zugeordnete Steuerkammern 43, 43' unterteilt. Jede Betätigungsmembran 35, 35' bildet eine fluiddichte bewegliche Wand zwischen der Verbindungskammer 34 und einer auf der der Schaltwippe 13 entgegengesetzten Seite angeordneten Steuerkammer 43, 43'. Jede der Steuerkammern 43, 43' kommuniziert mit einem in der ersten Anschlußebene 2 verlaufenden und beim Ausführungsbeispiel das obere Gehäuseteil 7 durchsetzenden eigenen Steuerkanal 44, 44'. Die Steuerkanäle 44, 44' münden wie die Fluidkanäle 22, 23, 32 mit ihrem äußeren Ende an der Außenfläche des Gehäuses 2, wo die Möglichkeit besteht, weiterführende Fluidleitungen anzuschließen.

Nachfolgend wird anhand der Figuren 2 und 3 eine erste bevorzugte Betriebsweise der Ventileinrichtung 1 erläutert, wobei in den schematischen Abbildungen gleichzeitig noch einige Variationsmöglichkeiten in der Bauform der Ventileinrichtung gezeigt sind.

Das fluidtechnische Anschlußbild der Ventileinrichtung 1 gemäß Figuren 2 und 3 ist so gewählt, daß der erste Fluidkanal 22 einen Entlüftungskanal bildet, der mit einer Drucksenke und insbesondere mit der Atmosphäre R verbunden ist, während der zweite Fluidkanal 23 einen Speisekanal bildet, der mit einer Druckquelle P verbunden ist, die ein unter einem Arbeitsdruck stehendes, insbesondere gasförmiges Druckmedium zur Verfügung stellt. Der dritte Fluidkanal 32 ist ein Arbeitskanal, der mit einem Verbraucher A verbindbar ist, beispielsweise einem Hauptventil, das durch die Ventileinrichtung 1 vorgesteuert werden soll, oder einen direkt angeschlossenen Verbraucher. Der erste Steuerkanal 44, der der ersten Betätigungsmembran 35 zugeordnet ist, die mit demjenigen Wippenarm 18 zusammenarbeitet, der die Mündung des ersten Fluidkanals 22 steuert, bildet einen zweiten Entlüftungskanal, der vergleichbar dem ersten Fluidkanal 22 ständig mit einer Drucksenke und insbesondere mit der Atmosphäre in Verbindung steht, was durch die Bezeichnung R' verdeutlicht wird. Der der zweiten Steuerkammer 43' und der zweiten Betätigungsmembran 35' zugeordnete zweite Steuerkanal 44' bildet einen Hauptsteuerkanal, der mit einer Steuerdruckquelle P_{S} verbunden ist, die einen variablen Steuerdruck liefern kann, wobei im vorliegenden Fall zumindest zwei Druckwerte möglich sind, zum einen Atmosphären- bzw. Umgebungsdruck und zum andern ein dem Arbeitsdruck entsprechendes Druckniveau. Die Druckbeaufschlagung wird über ein nicht näher dargestelltes, dem zweiten Steuerkanal 44' zugeordnetes Ventil gesteuert.

Das Ventil läßt sich nicht nur mit gasförmigem, sondern auch mit hydraulischem Druckmedium betreiben.

Die Figur 2 zeigt die Grundstellung der Ventileinrichtung, bei der es sich um eine Offenstellung handelt, die dadurch erreicht wird, daß am zweiten Steuerkanal bzw. Hauptsteuerkanal 44' ein Steuerdruck von Null bar angelegt wird, die zweite Steuerkammer 43' also entlüftet ist. Die an den Betätigungsmembranen 35, 35' und an der Schaltwippe 13 auftretende Kräftebilanz hat dann zur Folge, daß die Schaltwippe 13 in eine Schaltstellung verschwenkt wird, in der die Verbindung zwischen dem Entlüftungskanal 22 und der Verbindungskammer 34 abgesperrt ist, während gleichzeitig der Speisekanal 23 in Folge der von seiner Kanalmündung 25 abgehobenen Verschlußpartie 27' mit der Verbindungskammer 34 kommuniziert, so daß unter Arbeitsdruck stehendes Druckmedium in den Arbeitskanal 32 und somit zu einem angeschlossenen Verbraucher A überströmen kann.

Um den Verbraucher A zu entlüften, wird am Hauptsteuerkanal 44' ein erhöhter Steuerdruck angelegt, der beim Ausführungsbeispiel dem Arbeitsdruck entspricht. Die nun herrschende Kräftebilanz hat eine Kipp- bzw. Schwenkbewegung der Schaltwippe 13 in die aus Figur 3 ersichtliche, eine Schließstellung darstellende zweite Schaltstellung zur Folge. Die Verbindung zwischen dem Speisekanal 23 und der Verbindungskammer 34 ist hier abgetrennt, während gleichzeitig das Druckmedium vom Verbraucher A über die Verbindungskammer 34 hinweg in den vom ersten Fluidkanal gebildeten Entlüftungskanal 22 abströmen kann, weil die diesem zugeordnete Verschlußpartie 27 abgehoben ist.

Insgesamt ist die Ventileinrichtung 1 somit beim Ausführungsbeispiel in der Lage, eine 3/2-Ventilfunktion auszuüben.

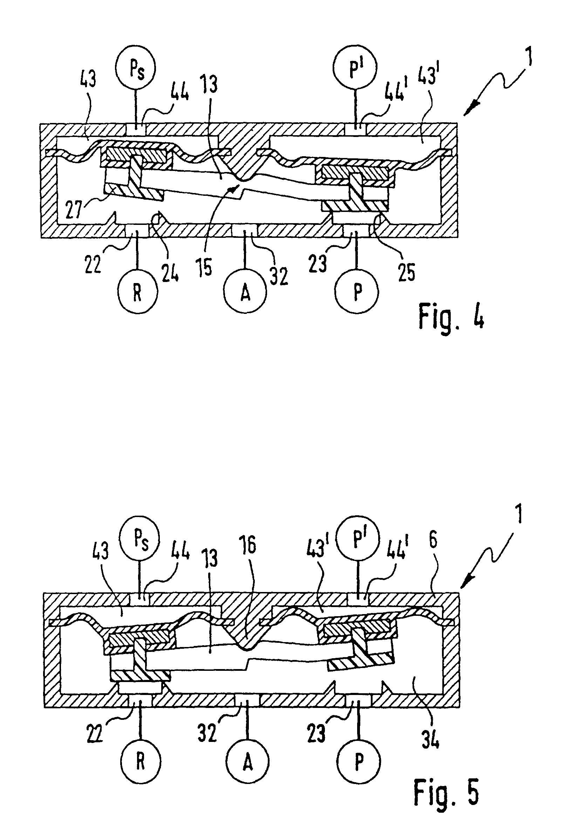

Während beim Ausführungsbeispiel der Figuren 2 und 3 durch das gewählte fluidische Anschlußbild eine Ventileinrichtung vom Typ "normalerweise geöffnet" vorliegt, repräsentiert das Ausführungsbeispiel der Figuren 4 und 5 aufgrund eines leicht geänderten Anschlußbildes eine Ventileinrichtung vom Typ "normalerweise geschlossen".

Bei der Ausführungsform gemäß Figuren 4 und 5 entspricht die Belegung der zur Leistungsebene gehörenden drei Fluidkanäle 22, 23, 32 derjenigen des Ausführungsbeispiels der Figuren 2 und 3. Die Änderungen in der fluidtechnischen Beschaltung betreffen lediglich die Ansteuerebene bzw. die beiden Steuerkanäle 44, 44'.

So liegt am zweiten Steuerkanal 44' und dementsprechend in der zugeordneten zweiten Steuerkammer 43' ständig ein Überdruck an, indem eine ständige Verbindung zu einer ersten Steuerdruckquelle P' vorliegt, wobei der Steuerdruck beim Ausführungsbeispiel dem am Speisekanal 23 anliegenden Arbeitsdruck entspricht. Das in der Steuerkammer 43' eingeschlossene Druckluftvolumen bildet somit eine Luftfeder, die ein Schließen des Speisekanals 23 bewirkt, solange in der ersten Steuerkammer 43 bzw. in dem mit dieser verbundenen ersten Steuerkanal 44 ein Steuerdruck von beispielsweise Null bar anliegt. Erreicht wird dies dadurch, daß der erste Steuerkanal 44 an eine zweite Steuerdruckquelle P_{S} angeschlossen ist, über die ein Steuerdruck mit variablem Druckniveau zugeführt werden kann. Liegt dieser Steuerdruck auf Atmosphärenniveau, nimmt die Schaltwippe 13 die aus Figur 4 gezeigte Schließstellung ein, wobei der Speisekanal 23 abgesperrt ist und eine Verbindung zwischen dem Arbeitskanal 32 und dem Entlüftungskanal 22 geschaffen ist. Zum Umschalten in die aus Figur 5 gezeigte Offenstellung wird durch die zweite Steuerdruckquelle P_{S} in der ersten Steuerkammer 43 ein Überdruck erzeugt, der dem Arbeitsdruck entsprechen kann, was ein Verschieben der Kräftebilanz zur Folge hat, so daß die Schaltwippe 13 in die Offenstellung gekippt wird, in der die drei Fluidkanäle 22, 23, 32 in der schon anhand der Figur 2 erläuterten Weise miteinander verschaltet sind.

Ersichtlich ermöglicht die Ventileinrichtung 1 eine Variation der ausführbaren Ventil- bzw. Verstärkerfunktionen, ohne nennenswerte konstruktive Eingriffe vornehmen zu müssen, es genügt im wesentlichen eine Änderung der fluidtechnischen Verschaltung einiger Kanäle.

Die Figuren 2 bis 5 machen auch deutlich, daß es vorteilhaft ist, die an der Außenseite des Gehäuses 6 vorgesehenen äußeren Kanalmündungen des ersten, zweiten und dritten Fluidkanals 22, 23, 32 zumindest in etwa auf gleicher Höhe liegend senkrecht zur Höhenrichtung 14 nebeneinander anzuordnen. In vergleichbarer Weise ist auch insbesondere vorgesehen, daß die an der Außenseite des Gehäuses 6 liegenden äußeren Kanalmündungen der Steuerkanäle 44, 44' ebenfalls zumindest in etwa auf gleicher Höhe liegend senkrecht zur Höhenrichtung 14 nebeneinander angeordnet sind.

Bei den Ausführungsbeispielen der Figuren 2 und 5 sind die beiden Betätigungsmembranen 35, 35' als voneinander getrennte, separate Bauteile ausgeführt. Demgegenüber sind sie bei der Ausführungsform der Figur 1 integral in einem gemeinsamen Membranelement 45 zusammengefaßt, was die Herstellung und die Montage erleichtert. In beiden Fällen bestehen die Betätigungsmembranen zweckmäßigerweise zumindest teilweise aus gummielastischem Material, zumindest in den elastischen Zwischenbereichen 42, wobei ein Polymermaterial bevorzugt wird.

Eine besonders leicht montierbare Anordnung ergibt sich, wenn die Schaltwippe 13, die Betätigungsmembranen 35, 35' und die Verschlußpartien 27, 27' in einem gemeinsamen Element zusammengefaßt sind.

Während beim Ausführungsbeispiel der Figur 1 die Schwenklagereinrichtung 16 aus darstellerischen Gründen im Bereich der den Betätigungsmembranen 35, 35' entgegengesetzten unteren Längsseite 29 der Schaltwippe 13 abgebildet ist, befindet sie sich tatsächlich, wie auch bei den Ausführungsbeispielen der Figuren 2 bis 5, im Bereich der den Betätigungsmembranen 35, 35' zugewandten oberen Längsseite 28 der Schaltwippe 13.

Änderungen in der Schaltcharakteristik der Ventileinrichtung lassen sich auch dadurch realisieren, daß man die Membranen nicht wie beim Ausführungsbeispiel gleichflächig, sondern ungleichflächig in unterschiedlichen Größen, Formen und/oder Querschnitten ausführt. Es ist ferner möglich, die Betätigungsmembranen so auszugestalten, daß sie im kräftefreien Zustand bereits eingeprägte Auslenkungen enthalten.

Während beim Ausführungsbeispiel der Figur 1 die Verschlußpartien 27, 27' in die Schaltwippe 13 eingelassen sind, so daß man von einer integrierten Bauform sprechen könnte, zeigen die Ausführungsformen der Figuren 2 bis 5 als separate Dichtkörper an der entsprechenden Längsseite der Schaltwippe 13 angebrachte Verschlußpartien 27, 27'.

Wie schon erwähnt, ist das Gehäuse 6 bei der Ausführungsform gemäß Figur 1 in drei Gehäuseteile 7, 8, 9 unterteilt, wobei die Einspannung der Betätigungsmembranen 35, 35' zwischen dem die Steuerkanäle 44, 44' enthaltenden oberen Gehäuseteil 7 und dem sich an dieses anschließenden mittleren Gehäuseteil 8 erfolgt. Das als Zwischenplatte bezeichenbare mittlere Gehäuseteil 8 gewährleistet einerseits eine sichere Abdichtung zwischen den Steuerkammern 43, 43' und erleichtert andererseits das Arbeiten mit verschiedenen, ungleichflächigen und/oder separaten Betätigungsmembranen.

Eine besonders kompakte und flache Bauweise der Ventileinrichtung 1 ist insbesondere dadurch gewährleistet, daß die Betätigungsmembranen 35, 35' und die durch die Schaltwippe 13 gesteuerten Kanalmündungen 24, 25 jeweils in einer Querrichtung nebeneinanderliegend angeordnet sind, wobei die Querrichtung quer und insbesondere rechtwinkelig zu den untereinander parallelen Längsachsen 46, 46' der Kanalmündungen 24, 25 verläuft, welche Längsachsen beim Ausführungsbeispiel mit der Höhenrichtung 14 gleichgerichtet sind.

Ein Vorteil der Ausführungsbeispiele liegt auch darin, daß sich aufgrund der Anordnung der äußeren Kanalmündungen der Fluidkanäle 22, 23, 32 einerseits und der Steuerkanäle 44, 44' andererseits definierte Schnittstellen ergeben, die es ermöglichen, die Ventileinrichtung im Sinne eines Baukastens als universellen "Einschub" zu verwenden. Ferner kann durch unterschiedliche Beschaltung der Steuerkammern 43, 43' mit Netz-, Steuer- und Umgebungsdruck ohne weitere Veränderungen an der Ventileinrichtung eine einfache Realisierung verschiedener Ventilzustände erfolgen.

In einer zweckmäßigen Ausgestaltung kann der Ausgangsvolumenstrom proportional zum Druck in einer der beiden Steuerkammern 43, 43' verändert werden, so daß zusammen mit einem geeigneten Aktorelement ein indirekt wirkendes Regelventil aufgebaut werden kann. Ferner besteht die Möglichkeit, durch zwei zusätzliche, in der Leistungsebene gelegene Membranen mit kleinerer Fläche als die oben erwähnten Betätigungsmembranen gleichzeitig mit der Mengenverstärkung auch eine Druckverstärkung zu realisieren.

Nicht zuletzt ist darauf zu verweisen, daß der Spannungszustand oder die Position einer oder mehrerer Membranen zur Erfassung der Stellgröße genutzt werden kann, dies insbesondere bei einem Einsatz der Ventileinrichtung als Verstärker.

## Patentansprüche

1. Ventileinrichtung, insbesondere Verstärker, mit einem Gehäuse (6), das ein bewegliches Schaltelement enthält, das zwei jeweils einer Kanalmündung (24, 25) eines Fluidkanals (22, 23) zugeordnete Verschlußpartien (27, 27') aufweist und an dem an beabstandeten Stellen zwei Betätigungsmembranen (35, 35') angreifen, die derart fluidbeaufschlagbar sind, daß das Schaltelement in zumindest zwei Schaltstellungen positionierbar ist, in denen die jeweils eine Kanalmündung durch die zugeordnete Verschlußpartie verschlossen und die jeweils andere Kanalmündung offen ist, wobei das Schaltelement von einer beim Umschalten eine Schwenkbewegung (17) ausführenden Schaltwippe (13) gebildet ist, an deren beidseits des Schwenkbereiches (15) liegenden Wippenarmen (18, 18') jeweils eine der Betätigungsmembranen (35, 35') angreift und jeweils eine der Verschlußpartien (27, 27') vorgesehen ist, und wobei die beiden den Verschlußpartien (27, 27') zugeordneten ersten und zweiten Fluidkanäle (22, 23) sowie ein dritter Fluidkanal (32) mit einer gemeinsamen Verbindungskammer (34) kommunizieren, wobei der dritte Fluidkanal (32) je nach Schaltstellung der Schaltwippe (13) über die Verbindungskammer (34) hinweg mit dem ersten oder dem zweiten Fluidkanal (22, 23) verbunden ist, **dadurch gekennzeichnet, daß** der dritte Fluidkanal (32) zwischen den beiden anderen Fluidkanälen (22, 23) und dabei gegenüberliegend dem Schwenkbereich (15) der Schaltwippe (13) im Bereich der unteren Längsseite (29) der Schaltwippe (13) in die Verbindungskammer (34) einmündet, und daß sich die Schwenklagereinrichtung (16) für die Schaltwippe (13) nur im Bereich der oberen Längsseite (28) der Schaltwippe (13) befindet.

2. Ventileinrichtung nach Anspruch 1, **dadurch gekennzeichnet, daß** die Schaltwippe (13) und die Betätigungsmembranen (35, 35') in einem gemeinsamen Gehäuseinnenraum (12) des Gehäuses (6) untergebracht sind.

3. Ventileinrichtung nach Anspruch 1 oder 2, **dadurch gekennzeichnet, daß** die Betätigungsmembranen (35, 35') jeweils zum einen am Gehäuse (6) und zum anderen an der Schaltwippe (13) befestigt sind.

4. Ventileinrichtung nach einem der Ansprüche 1 bis 3, **dadurch gekennzeichnet, daß** die beiden Betätigungsmembranen (35, 35') zumindest in etwa auf gleicher Höhe liegend quer zur Höhenrichtung (14) nebeneinander angeordnet sind.

5. Ventileinrichtung nach einem der Ansprüche 1 bis 4, **dadurch gekennzeichnet, daß** die beiden den Verschlußpartien (27, 27') zugeordneten Kanalmündungen zumindest in etwa auf gleicher Höhe liegend quer zur Höhenrichtung (14) nebeneinander angeordnet sind.

6. Ventileinrichtung nach einem der Ansprüche 1 bis 5, **dadurch gekennzeichnet, daß** die beiden Betätigungsmembranen (35, 35') einerseits und die beiden Verschlußpartien (27, 27') andererseits auf einander entgegengesetzten Längsseiten der Schaltwippe (13) vorgesehen sind.

7. Ventileinrichtung nach einem der Ansprüche 1 bis 6, **dadurch gekennzeichnet, daß** die Schaltwippe (13), die Betätigungsmembranen (35, 35') und die Verschlußpartien (27, 27') in einem gemeinsamen Element zusammengefaßt sind.

8. Ventileinrichtung nach einem der Ansprüche 1 bis 7, **dadurch gekennzeichnet, daß** die beiden Betätigungsmembranen (35, 35') jeweils eine fluiddichte bewegliche Wand zwischen der Verbindungskammer (34) und einer Steuerkammer (43, 43') bilden, wobei die beiden Steuerkammern (43, 43') jeweils mit einem Steuerdruck beaufschlagbar sind, wobei die Steuerdrücke zweckmäßigerweise unabhängig voneinander wählbar sind.

9. Ventileinrichtung nach Anspruch 8, **dadurch gekennzeichnet, daß** jede Steuerkammer (43, 43') mit einem Steuerkanal (44, 44') kommuniziert, wobei die an der Außenseite des Gehäuses (6) vorgesehenen äußeren Kanalmündungen der Steuerkanäle (44, 44') zumindest in etwa auf gleicher Höhe liegend quer zur Höhenrichtung (14) nebeneinander angeordnet sind.

10. Ventileinrichtung nach einem der Ansprüche 1 bis 9, **dadurch gekennzeichnet, daß** die beiden Betätigungsmembranen (35, 35') gleichflächig oder ungleichflächig ausgeführt sind.

11. Ventileinrichtung nach einem der Ansprüche 1 bis 10, **dadurch gekennzeichnet, daß** die Betätigungsmembranen (35, 35') wenigstens teilweise aus gummielastischem Material bestehen, insbesondere aus einem Polymermaterial.

12. Ventileinrichtung nach einem der Ansprüche 1 bis 11, **dadurch gekennzeichnet, daß** die beiden Betätigungsmembranen (35, 35') in einem gemeinsamen Membranelement (45) zusammengefaßt sind.

13. Ventileinrichtung nach einem der Ansprüche 1 bis 12, **dadurch gekennzeichnet, daß** das Gehäuse (6) aus mehreren schichtartig aneinandergesetzten Gehäuseteilen (7, 8, 9) besteht, wobei die beiden Betätigungsmembranen (35, 35') zwischen den gleichen Gehäuseteilen (7, 8) eingespannt sind.

14. Ventileinrichtung nach einem der Ansprüche 1 bis 13, **dadurch gekennzeichnet, daß** die an der Außenseite des Gehäuses (6) vorgesehenen äußeren Kanalmündungen der Fluidkanäle (22, 23, 32) zumindest in etwa auf gleicher Höhe liegend quer zur Höhenrichtung (14) nebeneinander angeordnet sind.

15. Ventileinrichtung nach einem der Ansprüche 1 bis 14, **dadurch gekennzeichnet, daß** die Schaltwippe (13) durch eine Federeinrichtung (47) in eine Schaltstellung vorgespannt ist.

## Claims

1. Valve unit, in particular booster, with a housing (6) containing a movable switch element, which has two seal sections (27, 27') each assigned to a passage opening (24, 25) of a fluid passage (22, 23) and on which two actuating membranes (35, 35') act at separated points, and which may be supplied with fluid in such a way that the switch element may be positioned in at least two switching positions in which in each case one passage opening is sealed by the assigned seal section and the other passage opening is open, wherein the switch element is formed by a switch rocker (13) which executes a swivel movement (17) when switching over, and on the rocker arms (18, 18') of which, lying either side of the swivel area (15), one of the actuating membranes (35, 35') acts and one of the seal sections (27, 27') is provided, and wherein the two first and second fluid passages (22, 23) assigned to the seal sections (27, 27'), together with a third fluid passage (32), communicate with a common connecting chamber (34) wherein, depending on the switching position of the switch rocker (13), the third fluid passage (32) is connected via the connecting chamber (34) with the first or the second fluid passage (22, 23), **characterised in that** the third fluid passage (32) enters the connecting chamber (34) between the two other fluid passages (22, 23) and at the same time opposite the swivel area (15) of the switch rocker (13) in the area of the lower long side (29) of the switch rocker (13), and that the pivot bearing device (16) for the switch rocker (13) is located only in the area of the upper long side (28) of the switch rocker (13).

2. Valve unit according to claim 1, **characterised in that** the switch rocker (13) and the actuating membranes (35, 35') are accommodated in a common housing inner space (12) of the housing (6).

3. Valve unit according to claim 1 or 2, **characterised in that** each of the actuating membranes (35, 35') is attached at one end to the housing (6) and at the other end to the switch rocker (13).

4. Valve unit according to any of claims 1 to 3, **characterised in that** the two actuating membranes (35, 35') are arranged next to one another at least approximately at the same height, lying at right-angles to the vertical direction (14).

5. Valve unit according to any of claims 1 to 4, **characterised in that** the two passage openings assigned to the seal sections (27, 27') are arranged next to one another at least approximately at the same height, lying at right-angles to the vertical direction (14).

6. Valve unit according to any of claims 1 to 5, **characterised in that** the two actuating membranes (35, 35') on the one hand and the two seal sections (27, 27') on the other hand are provided on opposite long sides of the switch rocker (13).

7. Valve unit according to any of claims 1 to 6, **characterised in that** the switch rocker (13), the actuating membranes (35, 35') and the seal sections (27, 27') are combined to form a single element.

8. Valve unit according to any of claims 1 to 7, **characterised in that** each of the two actuating membranes (35, 35') forms a fluid-tight movable wall between the connecting chamber (34) and a control chamber (43, 43'), wherein each of the two control chambers . (43, 43') may be placed under a control pressure, wherein the control pressures are expediently selectable independently of one another.

9. Valve unit according to claim 8, **characterised in that** each control chamber (43, 43') communicates with a control passage (44, 44'), wherein the outer passage openings of the control passage (44, 44') provided on the outside of the housing (6) are arranged next to one another lying at least approximately at the same height at right-angles to the vertical direction (14).

10. Valve unit according to any of claims 1 to 9, **characterised in that** the two actuating membranes (35, 35') are made equal or unequal in area.

11. Valve unit according to any of claims 1 to 10, **characterised in that** the actuating membranes (35, 35') are made at least partly of rubber-elastic material, in particular of a polymer material.

12. Valve unit according to any of claims 1 to 11, **characterised in that** the two actuating membranes (35, 35') are combined in a common membrane element (45).

13. Valve unit according to any of claims 1 to 12, **characterised in that** the housing (6) is comprised of several layer-like housing sections (7, 8, 9) joined together, wherein the two actuating membranes (35, 35') are clamped between the same housing sections (7, 8).

14. Valve unit according to any of claims 1 to 13, **characterised in that** the outer passage openings of the fluid passages (22, 23, 32) provided on the outside of the housing (6) are arranged next to one another lying at least approximately at the same height at right-angles to the vertical direction (14).

15. Valve unit according to any of claims 1 to 14, **characterised in that** the switch rocker (13) is biased in one switching positions by a spring device (47).

## Revendications

1. Dispositif à soupape, en particulier amplificateur, comportant un boîtier (6) qui contient un élément de commutation mobile, qui comporte deux parties d'obturation (27, 27') associées chacune à une bouche de canal (24, 25) d'un canal de fluide (22, 23), et sur lequel agissent, en des emplacements à distance, deux membranes d'actionnement (35, 35') qui sont soumises à l'action du fluide de manière que l'élément de commutation puisse être positionné dans au moins deux positions de commutation dans lesquelles une bouche de canal est fermée par la partie d'obturation associée et l'autre bouche de canal est ouverte, l'élément de commutation étant formé par une bascule de commutation (13) qui exécute, pendant la commutation, un mouvement de pivotement (17) et sur les bras (18, 18') de laquelle bascule, situés des deux côtés de la zone de pivotement (15), agit l'une des membranes d'actionnement (35, 35'), et l'une des parties d'obturation (27, 27') est prévue, et les deux premiers et deuxièmes canaux de fluide (22, 23), associés aux parties d'obturation (27, 27'), ainsi qu'un troisième canal de fluide (32) communiquant avec une chambre de liaison commune (34), le troisième canal de fluide (32) étant relié, suivant la position de commutation de la bascule de commutation (13), à travers la chambre de liaison (34), au premier ou au deuxième canal de fluide (22, 23), **caractérisé en ce que** le troisième canal de fluide (32) débouche entre les deux autres canaux de fluide (22, 23) et ici, face à la zone de pivotement (15) de la bascule de commutation (13), dans la zone du côté longitudinal inférieur (29) de la bascule de commutation (13), dans la chambre de liaison (34), et **en ce que** le dispositif à palier de pivotement (16) pour la bascule de commutation (13) ne se trouve que dans la zone du côté longitudinal supérieur (28) de la bascule de commutation (13).

2. Dispositif à soupape selon la revendication 1, **caractérisé en ce que** la bascule de commutation (13) et les membranes d'actionnement (35, 35') sont logées dans un volume intérieur commun (12) du boîtier (6).

3. Dispositif à soupape selon la revendication 1 ou 2, **caractérisé en ce que** les membranes d'actionnement (35, 35') sont fixées chacune d'une part au boîtier (6) et d'autre part à la bascule de commutation (13).

4. Dispositif à soupape selon l'une des revendications 1 à 3, **caractérisé en ce que** les deux membranes d'actionnement (35, 35') sont disposées au moins côte à côte approximativement à la même hauteur, horizontalement et transversalement au sens de la hauteur (14).

5. Dispositif à soupape selon l'une des revendications 1 à 4, **caractérisé en ce que** les deux bouches de canal associées aux parties d'obturation (27, 27') sont disposées côte à côte au moins approximativement à la même hauteur, horizontalement et transversalement au sens de la hauteur (14).

6. Dispositif à soupape selon l'une des revendications 1 à 5, **caractérisé en ce que** les deux membranes d'actionnement (35, 35') d'une part, et les deux parties d'obturation (27, 27') d'autre part sont prévues sur des côtés longitudinaux opposés l'un à l'autre de la bascule de commutation (13).

7. Dispositif à soupape selon l'une des revendications 1 à 6, **caractérisé en ce que** la bascule de commutation (13), les membranes d'actionnement (35, 35') et les parties d'obturation (27, 27') sont réunies en un élément commun.

8. Dispositif à soupape selon l'une des revendications 1 à 7, **caractérisé en ce que** les deux membranes d'actionnement (35, 35') forment chacune une paroi mobile étanche aux fluides entre la chambre de liaison (34) et une chambre de commande (43, 43'), les deux chambres de commande (43, 43') pouvant être soumises chacune à une pression de commande, les pressions de commande pouvant être choisies, avantageusement, indépendamment l'une de l'autre.

9. Dispositif à soupape selon la revendication 8, **caractérisé en ce que** chaque chambre de commande (43, 43') communique avec un canal de commande (44, 44'), les bouches extérieures, prévues sur le côté extérieur du boîtier (6), des canaux de commande (44, 44'), étant disposées côte à côte au moins approximativement à la même hauteur, horizontalement et transversalement au sens de la hauteur (14).

10. Dispositif à soupape selon l'une des revendications 1 à 9, **caractérisé en ce que** les deux membranes d'actionnement (35, 35') ont la même surface ou une surface différente.

11. Dispositif à soupape selon l'une des revendications 1 à 10, **caractérisé en ce que** les membranes d'actionnement (35, 35') sont réalisées au moins en partie en une matière qui présente l'élasticité du caoutchouc, en particulier en une matière polymérique.

12. Dispositif à soupape selon l'une des revendications 1 à 11, **caractérisé en ce que** les deux membranes d'actionnement (35, 35') sont réunies en un élément en membrane commun (45).

13. Dispositif à soupape selon l'une des revendications 1 à 12, **caractérisé en ce que** le boîtier (6) est constitué de plusieurs parties (7, 8, 9) juxtaposées en couches, les deux membranes d'actionnement (35, 35') étant serrées entre les mêmes parties (7, 8) du boîtier.

14. Dispositif à soupape selon l'une des revendications 1 à 13, **caractérisé en ce que** les bouches extérieures, prévues sur le côté extérieur du boîtier (6), des canaux de fluide (22, 23, 32), sont disposées côte à côte au moins approximativement à la même hauteur, horizontalement et transversalement par rapport au sens de la hauteur (14).

15. Dispositif à soupape selon l'une des revendications 1 à 14, **caractérisé en ce que** la bascule de commutation (13) est précontrainte dans une position de commutation par un dispositif à ressort (47).
